# EUROPEAN PATENT SPECIFICATION

(11) **EP 2 602 136 B1**
(45) Date of publication and mention of the grant of the patent: **04.07.2018**
(21) Application number: 12007561.9
(22) Date of filing: 16.09.2009
(51) Int. Cl.: B60H 1/32

(54) **Air conditioning system for a car**
Klimaanlagensystem für ein Auto
Système de climatisation pour véhicule

(30) Priority: 26.09.2008 DE 102008048911; 28.05.2009 DE 102009023147
(43) Date of publication of application: 12.06.2013
(62) Divisional of application: 09170439.5
(73) Proprietor: Valeo Klimasysteme GmbH, 96476 Bad Rodach (DE)
(72) Inventor: Gartner, Stefan, 96476 Bad Rodach (DE); Gesell, Bodo, 64850 Schaafheim (DE); Petit, Christophe, 72700 Rouillon (FR)
(74) Representative: Tran, Chi-Hai

(56) References cited:
- EP-A- 1 674 310
- DE-A1- 4 410 120
- DE-A1- 10 350 193
- DE-A1-102004 060 130
- US-A- 5 894 737

## Description

The invention relates to an air conditioning system for a car, with a housing, at least one evaporator, a condensation water collection area and a condensation water canal for removing the condensation water from the housing.

The evaporator can cool the airflow passing through the air conditioning system in order to supply the car compartment with cooled air. When the airflow flows through the evaporator, a portion of the humidity contained in the airflow can be condensed in such a way that condensation water is formed directly on the evaporator or on other components positioned downstream from the evaporator. This condensation water must be removed from the air conditioning system in order to prevent it from being carried away by the airflow flowing through the air conditioning system and entering into the interior of the car.

Different solutions are disclosed in the prior art by means of which the condensation water is intended to be removed. The document DE 44 10 120 A1 discloses an arrangement providing a baffle plate downstream from the evaporator, on which baffle plate the condensation water is intended to be condensed. A channel is connected to the baffle plate, which channel leads to an outlet in the housing of the air conditioning system.

The document WO 2006/039549 A1 discloses an air conditioning system in which a deflector plate is arranged downstream from the evaporator, which deflector plate first affects the air flows and secondly is intended to capture a portion of the condensation water. An outlet opening is provided beneath the deflector plate, through which outlet opening the captured condensation water is removed from the housing.

The document DE 44 10 120 also discloses a means for removing condensation water.

A first problem addressed by the invention consists in creating an air conditioning system for a car in which the condensation water can be removed in a particularly reliable way under all operating conditions.

In order to solve this first problem, it is provided an air conditioning system according to claim 1. The invention is based on the basic idea of separating the outlet path for the condensation into two sections that can optimally be adapted to the respective environmental conditions. These environmental conditions consist in particular of the airflow rate in the area of the corresponding sections of the outlet path as well as of the space that is available.

It is preferably provided that the condensation water collection area is an open collecting bowl. An open collecting bowl is particularly suitable because a low airflow rate is customarily common downstream from the evaporator. Therefore, there is no risk that condensation water from the air will be taken along. At the same time, the condensation water can be collected with very little expenses in an open collecting bowl.

The collecting bowl preferably has a floor that is inclined. This ensures that the condensation water is

According to a preferred embodiment, it is provided that the floor of the collecting bowl declines toward the condensation water removal section. This enables the condensation water, when regarded from the x-direction of the car, to be purged out of the housing behind the evaporator.

It is preferably provided that the collecting bowl is bordered by a collection wall. The collection wall acts as a dam, making it possible to contain the condensation water in the collecting bowl and to collect it at a certain point. Advantageously, the collection wall is formed by at least one vertical rib, or by an inclined plate.

According to the invention, it is provided that the condensation water removal section is a condensation water removal canal extending from the collecting bowl and extends beneath the collection wall through to an outlet. This design can be realized with minimal design effort.

According to an alternative configuration, it is provided that the collection wall has at least one opening that leads to the condensation water removal canal. In this configuration, the transition from the collecting bowl to the condensation water removal section can be variably adjusted particularly to different requirements.

It is provided that the condensation water removal section is designed as a condensation water removal canal that extends from the opening to an outlet. The condensation water removal canal serves as a connection between the collecting bowl and the outlet in such a manner that the outlet can be arranged very flexibly at the desired location of the housing of the air conditioning system.

According to the invention, it is provided that the collection wall has two outlets that are arranged, measured in the y-direction of the car, preferably approximately 25% and 75% of the width of the collection section. This arrangement is characterized, in comparison to a collection wall having only one outlet, in that the collecting bowl has a lesser height.

It is then provided that the removal section is designed as a condensation water removal canal with two coalescing branches extending from the openings to the outlet. This ensures that despite both of the openings, only one single outlet is necessary from the housing of the air conditioning system.

According to a further embodiment, it is provided that the collection wall has three openings that are arranged, measured in the y-direction of the car, approximately 17%, 50%, and 83% of the width of the collection section. This embodiment is characterized in that an even lesser height of the collection wall and thus of the collecting bowl is necessary. Nonetheless, the constructive expenses for the three openings are greater.

It is preferably provided that the condensation water removal section is designed as a condensation water removal canal that with three coalescing branches extending from the openings to the outlet. This variant also makes it possible with merely one single outlet from the housing.

It is furthermore preferably provided that the floor of the collecting bowl in the y-direction of the car declines to the opening or to the condensation water removal canal. This ensures that the condensation water flows toward the outlet and cannot stay in the housing, even if the car is positioned at an incline.

It is moreover preferably provided that the collection wall, regarded from the x-direction of the car, lies as far back as possible in the region of the opening or of the openings. This design supports that the condensation water is reliably guided toward the condensation water removal section, even if the car is not positioned horizontally.

According to an embodiment, it is provided that the collection wall is formed by vertical ribs. This embodiment is characterized by minimal constructive expenses.

According to a further embodiment, it is provided that the collection wall is formed by a plate that is inclined. In this way, a greater capacity of the collecting bowl can be maintained. Moreover, condensation water spilling over the collection wall is prevented.

According to the invention, it is provided that the condensation water removal canal has a closed cross section. This is particularly advantageous in situations when the condensation water removal canal is located in an area of the air conditioning system in which high airflow velocities can arise during operation. If the condensation water removal canal is designed as closed, no condensation water can be swept along with the air even at high airflow speeds. At the same time, a closed cross section of the condensation water removal canal reduces the risk, that during extreme inclinations of the car as can sometimes occur in all terrain vehicles, condensation water escapes from the condensation water removal canal and then is carried along with the air.

It is provided that the closed cross section of the condensation water removal canal is maintained by a cover. Preferably, the cover is removable. This makes it possible to provide the cover only when it is required owing to the use conditions of the vehicle, for example in an all terrain vehicle or an SUV.

According to a further embodiment, it is provided that the condensation water removal canal narrows toward the top. This design is based on the knowledge that it is not necessary in a plurality of application areas to completely close the condensation water removal canal, but rather that it can be sufficient to use a cross section that narrows toward the top.

Additionally, the cover is provided with at least one elevated lug that inserts itself between ribs of the collection wall. Moreover, a seal is provided on the cover and/or the wall of the condensation water removal canal in order to seal the removal canal.

It is preferably provided that the condensation water removal canal in the area of a separation plane is formed between two halves of the housing. In this configuration, no additional means are required, in particular no additional components, in order to form the condensation water removal canal. It is sufficient to suitably design both halves of the housing in the area of their separation plane.

Moreover, the air conditioning system for a car may comprise an external water collection area and an external water canal. The water collected in the external water collection area may reach the interior of the air conditioning system inadvertently. Conventionally, a water separation is provided in order to prevent water entering from the exterior into the interior of the air conditioning system. However, if, for example, such an amount of water enters into a car washing system that the water separation is overfilled, a portion of the water can enter into the housing of the air conditioning system. The aim of the water collection area in the air conditioning system is thus to carry away the external water so that, during the operation of the air conditioning system, it does not ultimately reach the interior of the vehicle through the air vents. In addition to circumstances where the water separation is overfilled, the external water can also reach the air conditioning system in the form of water ingress because of a defect, for example if a seal is damaged. Finally, the external water collection area makes it possible to ensure that external water, which overfilled the water separation because it was in the form of snow, is regularly removed from the housing of the air conditioning system before it is transported by the airflow through the air conditioning system into the interior of the vehicle.

Another problem addressed by the invention consists in further developing an air conditioning system of the previously mentioned type in such a manner that not only the condensation water but also the external water can be reliably removed outside the air conditioning system efficiently, in a simple way and with a minimum of effort.

In order to solve this second problem, it is preferably provided according to claim 5 that the condensation water removal canal and the external water canal flow into at least one common water outlet opening. The removal of both the condensation water as well as the external water by means of two separate canals reliably prevents that condensation water reached the external water collection area by means of the external water canal. This could namely lead to condensation water arriving at a blower that is arranged in the vicinity of the external water collection area.

It is preferably provided that the external water canal extends, in sections, parallel to the condensation water removal canal. This leads to compact construction. Preferably, the external water canal extends parallel to a starting section of the condensation water canal until the water outlet opening. This makes it possible to design the external water canal integrated with the condensation water canal.

The external water canal preferably starts in the proximity of an air filter of the air conditioning system. This makes it possible to guide the external water, which concentrates on the air filter, directly to the water outlet opening.

According to a preferred embodiment, it is provided that the external water canal extends from an air filter housing to an evaporator housing. The external water canal can run in sections outside the housing in such a manner that it runs directly to the water outlet opening with relative ease.

In order to solve the second problem addressed by the invention, the housing is provided with the water canal having a common bottom surface, two lateral walls, and a partition wall that separates the condensation water removal canal from the external water canal. The water canal thus unifies in one component not only the condensation water removal canal but also the external water canal, which leads to a minimal production expenses.

The water outlet opening is preferably provided that is arranged beneath the partition wall. The partition wall thus extends transversely through the water outlet opening in such a manner that it is prevented that condensation water enters into the external water canal and the converse, for example.

It is furthermore preferably provided that the water canal has two inlets for condensation water and one inlet for external water. This design is advantageous to the effect that even with considerable vehicle inclination, it can be reliably ensured that the condensation water remains in the condensation water canal and arrives at the water outlet opening from there.

It is preferably provided that the partition wall extends from the external water inlet up to the condensation water inlet that is positioned on the other end of the water canal. This configuration of the partition wall prevents external water from being able to enter into the condensation water canal even in the event of extreme vehicle inclinations.

According to one embodiment of the invention, a cover is provided that is positioned upon both of the lateral walls and the partition wall. In this manner, closed canals for the condensation water and the external water are formed from which the condensation water and/or the external water cannot undesirably leak even in the instance of extreme vehicle inclinations or stresses.

It is furthermore provided that the condensation water canal and the external water canal have are inclined of at least 17° toward the water outlet opening with a standard alignment of the air conditioning system. This as well ensures that the condensation water and the external water, even in the instance of extreme vehicle inclinations, will still be reliably conducted to the water outlet opening.

The invention will be explained in the following using embodiments, which are given as particular embodiments but are not to be considered as particular limitation. Those embodiments are represented in the appended drawings, which show in:
- figure 1 shows a perspective view of an air conditioning system according to a first embodiment;
- figure 2a shows an explosion view of the air conditioning system of figure 1;
- figure 2b shows a partial cross sectional view of the housing of the air conditioning system of figures 1 and 2a;
- figure 3 shows a cross section along the plane III-III of figure 5;
- figure 4 shows a cross section along the plane IV-IV of figure 3;
- figure 5 shows a cross section along the plane V-V of figure 3;
- figure 6 shows a partial view of a section of figure 2;
- figure 7 shows the area of the air conditioning system shown in figure 6, wherein the cover of the water condensation removal canal is removed;
- figure 8 shows a schematic perspective sectional view of the air conditioning system according to a second embodiment;
- figure 9 shows a schematic perspective sectional view of the air conditioning system of figure 8;
- figure 10 shows an enlarged section of figure 9.
- figure 11 shows a perspective view of the air conditioning system according to a third embodiment;
- figure 12 shows an explosion view of the air conditioning system of figure 11;
- figure 13 shows a perspective view of the lower housing portion of the air conditioning system of figure 11;
- figure 14 shows the lower housing portion of figure 13, wherein the air filter and the cover of the water canal have been removed;
- figure 15 shows a top view of the lower housing portion of figure 14;
- figure 16 shows a detail view of the lower housing portion of figure 14;
- figure 17 shows a further detail view of the lower housing portion of figure 14; and
- figure 18 shows a perspective view of a cross section along the plane XIII-XIII of figure 17.

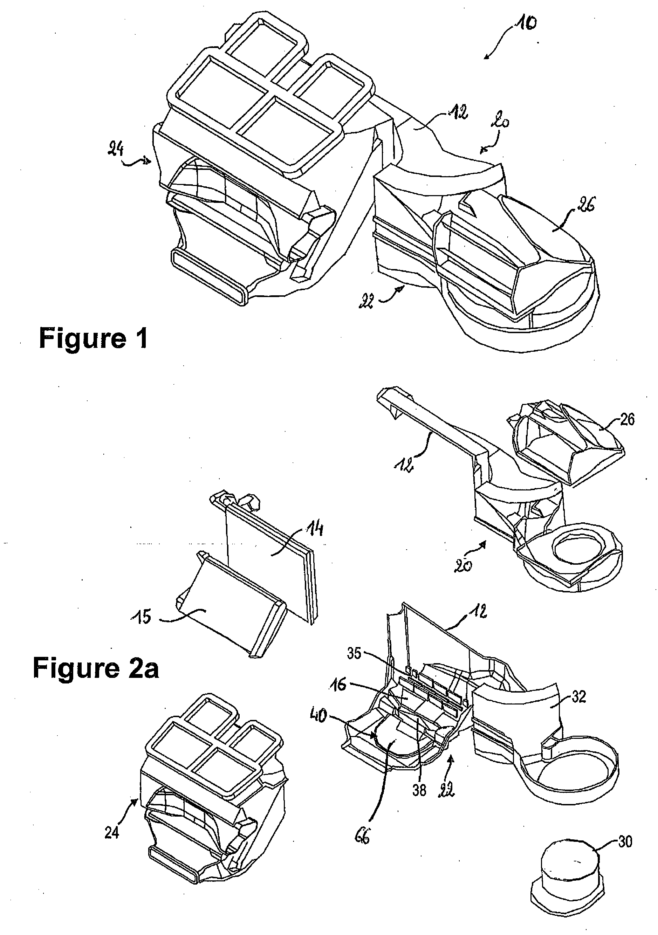

Figures 1 is a perspective view of an air conditioning system according to a first embodiment of the present invention. This first embodiment comprises an air conditioning system 10 which has a housing 12 in which different components are arranged. These are described as follows only in so far as necessary for the understanding of the invention.

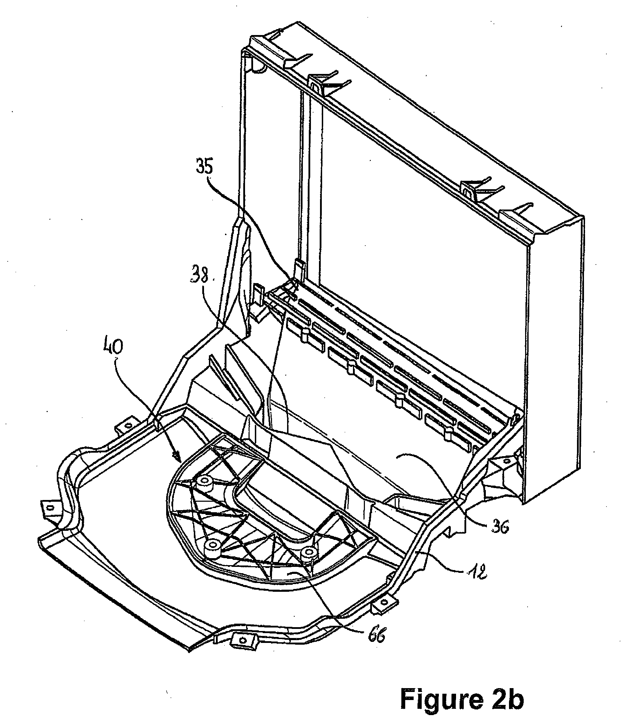

Figure 2a shows an explosion view of the air conditioning system of figure 1. The housing 12 of the air conditioning system contains an upper housing portion 20, a lower housing portion 22, an air conditioning module 24, and an air inlet housing 26.

Varying from the shown embodiment, it is also possible, in general, for the housing to be designed differently. In particular, the housing need not be designed with an upper and a lower housing part.

A blower unit 30 is arranged laterally in the interior of the lower housing part 22 and of the upper housing part 20. An air filter 32 is located downstream the blower unit 30 and is arranged in an air filter holder 33.

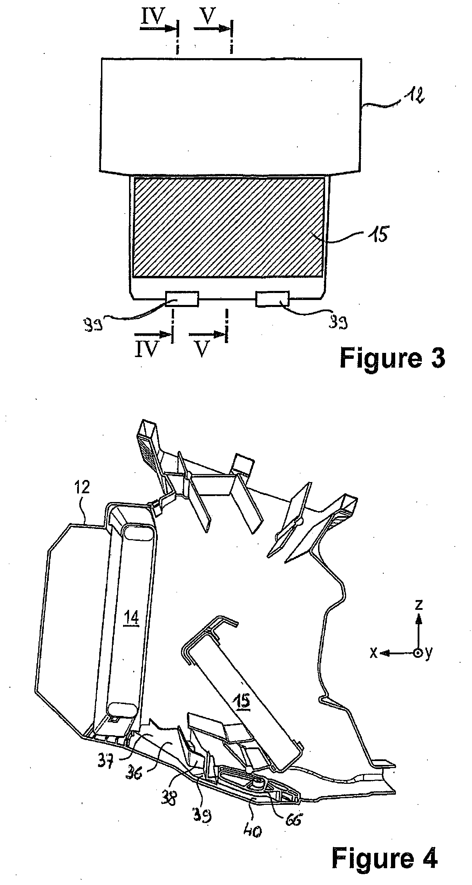

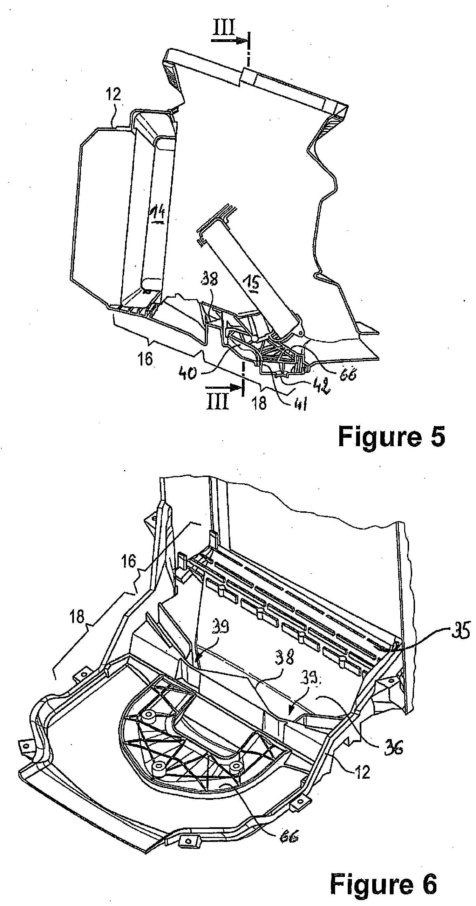

In the housing 12, are arranged heat exchangers, such as an evaporator 14 and a heater core 15. The arrangement of the evaporator 14 and the heater core 15 is particularly shown on figures 4 and 5. The evaporator 14 and the heater core 15 are arranged downstream from the air filter 32. The evaporator 14 is inserted in an evaporator holder 35.

In the evaporator 14, a refrigerant can be evaporated. The heat required for evaporation is taken from an airflow that passes through the evaporator 14. The heat exchange between the airflow and the refrigerant leads to a reduction in the air temperature by means of which a portion of the water contained in the airflow is condensed on the evaporator 14 or also on the components arranged downstream from the evaporator 14. An outlet path is provided to remove the condensation water from the housing 12.

The outlet path is composed of a condensation water collection area 16 and a condensation water removal section 18, which are more particularly detailed on figures 5 and 6.

The condensation water collection area 16 is formed directly downstream from the evaporator 14, in which condensation water collecting area 16 collects condensation water resulting from the cooling of the airflow during the passage through the evaporator 14.

The condensation water collection area 16 is designed as a collecting bowl 36 that extends from the evaporator 14 to a collection wall 38. The collection wall 38 is formed by a rib or a plurality of elevated ribs. It can be clearly seen that the collecting bowl 36 has a floor 37 that declines from the evaporator 14 rearward and downward. The floor 37 of the collecting bowl 36 is inclined in the x-direction of the vehicle, as defined on figure 4.

In this instance, a conventional coordinate system is applied in a vehicle, wherein the x-axis coincides with the longitudinal axis of the vehicle, while the y-axis and z-axis coincide with the lateral axis of the vehicle and the vertical axis of the vehicle, respectively.

The condensation water is collected within collecting bowl 36 and then flows from the collecting bowl 36 through openings, arranged beneath and/or through the collection wall 38, into a condensation water removal channel 40 that leads to a water outlet opening 42. Particularly, the collecting bowl 36 has two openings 39 in the region of the collection wall 38, as shown on figures 4 and 5, that represent the transition from the condensation water collection area 16 to the condensation water removal section 18.

The condensation water removal section 18 comprises the condensation water removal canal 40 which starts at the openings 39.

Varying from the shown embodiment, two or more water outlet openings 42 can also be used instead of a single water outlet opening 42.

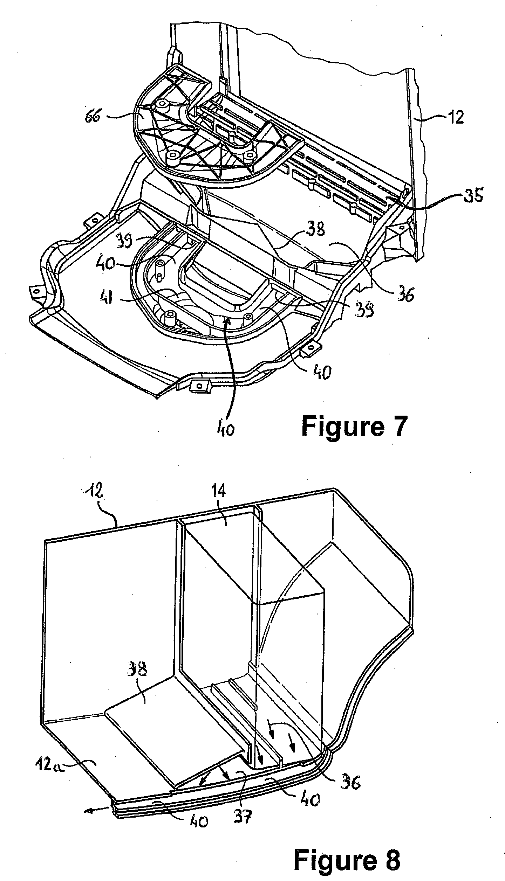

According to the present invention, the condensation water removal canal 40 has a closed cross section since it is provided with a cover 66. The cover 66 is removable as shown on figures 6 and 7.

The condensation water removal canal 40 has here, since two openings 39 are provided in the collection wall 38, two branches, beginning both on the right side and on the left side of the condensation water collection area 36, that coalesce with one another at the end removed from the collection wall 22 and extend up to the water outlet opening 42 in the housing 12 through which the condensation water can be conducted outward.

As it can be seen in figure 5, the condensation water removal canal 40 is inclined from the collection wall 38 toward the water outlet opening 42. According to a particular embodiment, a step 41 is provided between the collection wall 38 and the water outlet opening 42.

The use of two openings 39 has, in comparison to the collecting bowl 36 with only one single opening 39, the advantage that the height of the collecting bowl 36 is smaller. With a single central opening 39, the floor 37 of the collecting bowl 36 upwardly increases, toward the right and toward the left, over half of the width of the collecting bowl 36. This results in a comparatively substantial height difference between the level of the floor 37 on the exterior of the collecting bowl 36 and the level of the floor 37 in the region of the opening 39. If, in contrast, two openings 39 are used, the floor 37 increases, on the right and left of openings 39, only over one quarter of the width of the collecting bowl 36. The difference in levels between the highest and the lowest point of the floor 37 in the region of the collecting bowl 36 is thus reduced by a half.

In more complex embodiments, three or more openings 39 can be used. In this manner, the difference in level between the highest and lowest point of the floor 37 of' the collecting bowl 36 in the region of the collection wall 38 will be further reduced.

As it can be seen particularly in figures 4 and 5, the floor 37 of the collecting bowl 36 is inclined not only in the x-direction of the vehicle, but also in the y-direction. This can be seen in figures 4 and 5 by the course of the leading edge between the floor 37 and the rib forming the collection wall 38. The floor 37 is inclined toward each opening 39. Particularly, the foor 37 is thus designed to have a plurality of inclinations.

Moreover, the collection wall 38 is not designed to be continuously level but rather, it is pulled as far back as possible in the region of each opening 39 while it protrudes forward between the openings. In this manner, it is ensured that, with each inclination the vehicle makes that can occur during standard operation, the lowest point of the collecting bowl 36 lies in the region of one of the openings 39.

Advantageously, the inclination of the floor 37 of the collecting bowl 36 is thus in the range of 17° for "normal" passenger vehicles and in the range of 27° for Sport Utility Vehicles (SUV) and all road vehicles. This relates to the inclination in both the x-direction as well as in the y-direction.

According to an alternative variant embodiment, the floor 37 can also be inclined in the y-direction. Generally, the architecture is configured in such a manner that there is always an inclination of the floor 37 toward the condensation water removal canal 40.

The division of the outlet path for the condensation into the condensation water collection area 16 and the condensation water removal section 18 optimally uses the properties of the interior of the housing 12 of the air conditioning system.

A relatively low airflow velocity is present downstream from the evaporator 14 so that the condensation can be collected in the open part of collecting bowl 36 that can be realized with minimal expenses. In contrast, relatively higher airflow velocities are present downstream of the collecting bowl 36 since in this region a very limited flow path is available for the airflow owing to the heater core 14. In this region, the condensation water removal canal 40 is designed to be covered with the cover 66. Consequently, there is no risk of the condensation water being taken along with the airflow and entering into the interior of the vehicle by way of an air vent.

The cover 66 can also be removed in certain situations if, given use conditions, it cannot be expected that condensation water will be taken along out of the condensation water removal canal 40. For example, the cover 66 can be affixed by all road vehicles and SUVs only.

Instead of openings 39, it can also be provided in the region of the collection wall 38 that the collection wall is provided with openings itself, for example in that the collection wall 38 is formed from a plurality of elevated ribs between which the openings 39 for the condensation are then formed.

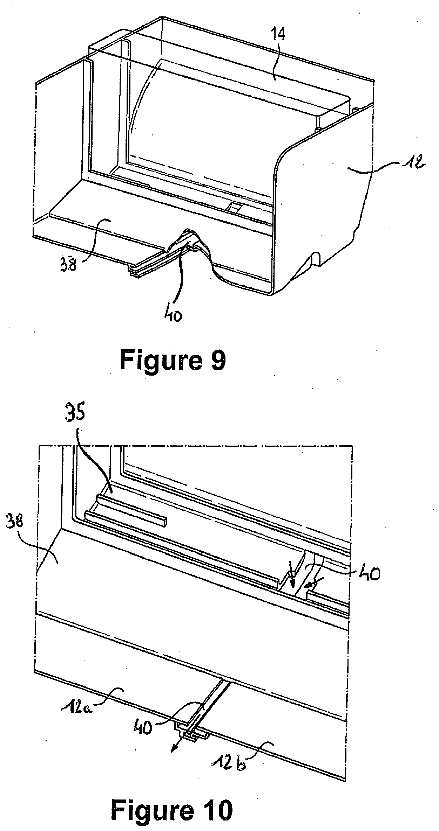

Figures 8 to 10 show a second embodiment. This differs not only in the direction of the collection wall 38 that separates the collecting bowl 36 from the outlet canal, but also in the design of the water outlet opening 42.

The collection wall 38 is designed, in the second embodiment, as a slantingly positioned plate that, on the upstream side, is directly close to the evaporator 14 and from there extends in a slantingly downward way to the floor 37 of the collecting bowl 36. In this manner, the majority of the collecting bowl 36 is formed beneath the collection wall 38.

The condensation water removal canal 40 is designed here in the style of a depressed channel that already begins beneath the evaporator 14, travels through the collecting bowl 36 and then extends beneath the collection wall 38 out from the collecting bowl 36 in the direction of the opening, not shown on Figure 8 to 10.

The condensation water removal canal 40 is formed between two halves 12a and 12b of the housing 12. As a consequence, the housing 12 is vertically divided into a left side half 12a and a right side half 12b, whereas, the housing 12 according to the first embodiment, as shown in figure 1 to 7, is horizontally split into a upper housing portion 20 and a lower housing portion 22.

The two halves 12a and 12b of the housing 12 are arranged in such a way that the condensation water removal canal 40 is formed in the region of its mold separating surface in such a manner that it automatically results upon sticking the two halves 12a and 12b of the housing 12 together.

The condensation water removal canal 40 has a wide cross sectional form beneath the evaporator 14 and in the region of the collecting bowl 36, while the condensation water removal canal 40 is designed as narrowed on its upper surface outside the collection bowl 36, without being however fully closed. The narrowed cross sectional form ensures that even during high airflow velocities, no condensation can be taken along from the condensation water removal canal 40.

With regard to the inclination of the floor 37 in the region of the collecting bowl 36, reference is made to the above explanations of the first embodiment.

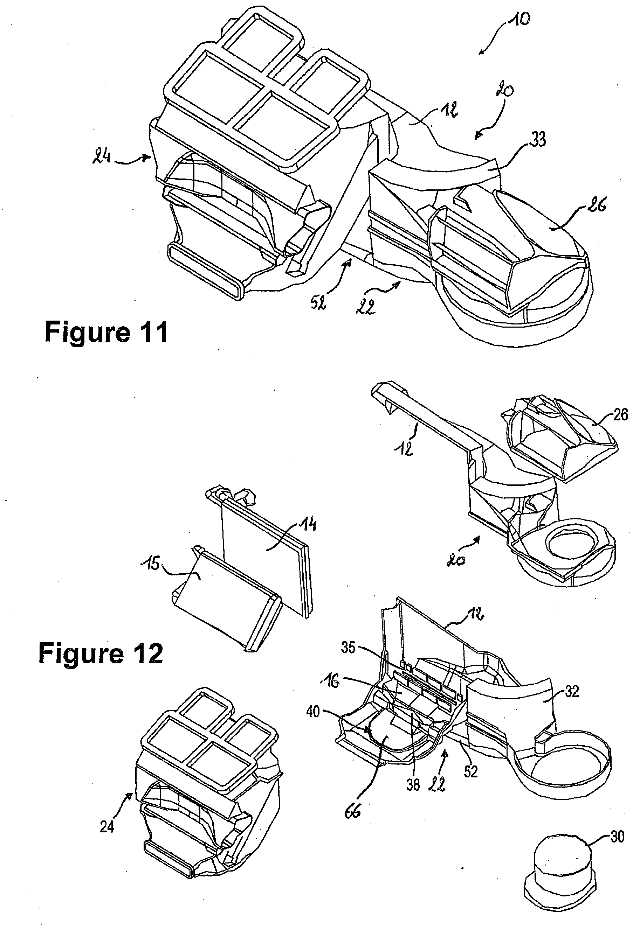

Figure 11 shows a third embodiment of the present invention. Figure 11 shows an alternative design of the air conditioning system 10 as defined in relation with figures 1 to 10. The air conditioning system 10 has a housing 12 in which different components are arranged.

The third embodiment has many parts which are similar to those already detailed in relation with the first embodiment. As a consequence, without opposite notice, those elements will be identified by the same reference number and are supposed to have the same design and technical features as those already depicted.

The third embodiment mainly differs from the first embodiment by the implementation of an external water collection area 50.

The external water collection area 50 is formed beneath the air filter holder 33. The aim of the external water collection area 50 is to collect the external water that, contrary to expected, overfills the external water separation and penetrates into the housing 12 of the air conditioning system 10.

The external water is separated from the air stream, in particular upon crossing the air filter 32, so that is collected beneath the air filter 32 in the external water collection area 50.

An external water duct begins at the external water collection area 50. The external water duct is composed of a first external water duct section 52 and a second external water duct section 54.

The first external water duct section 52 is, preferably, made of a pipe that extends from the external water collection area 50, close to an area that receives the air filter 32, into the lower housing portion 22, close to an area that is in the vicinity of the condensation water collection area 16, in proximity to the evaporator holder 35.

Alternatively, the first external water duct section 52 may be arranged within the lower housing portion 20 or outside the lower housing portion 20.

There, the external water directed from the external water collection area 50 flows through the first external water duct section 52 into the second external water duct section 54 of the external water canal.

The second external water duct section 54 extends parallel to the condensation water removal canal 40, as previously described.

The second external water duct section 54 starts there beside in the region of the collection wall 38, and extends until the water outlet opening 42.

The first external water duct section 52 and the second external water duct section 54 are also designed in such a manner that the external water also flows toward the water outlet opening 42 if the vehicle is inclined.

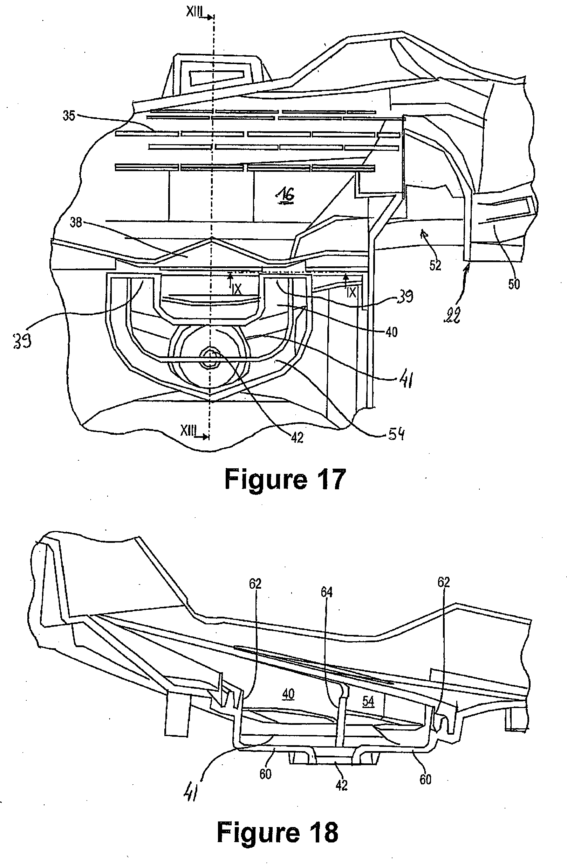

The condensation water canal 40 and the second external water duct section 54 of the external water canal form a water canal in a separate component that has a common bottom surface 60, as shown on figure 18, two lateral walls 62, and a separation wall 64 which separates the condensation water canal 40 and the second external water duct section 54 of the external water canal.

This water canal is generally designed to be U-shaped channel. Therefore, the condensation water canal 40 and the second section 54 of the external water canal extend along the entire U shape.

The water outlet opening 42 is arranged at the apex of the U shape, and the condensation water canal 40 is connected to the condensation water collection area 36 at both of the free ends.

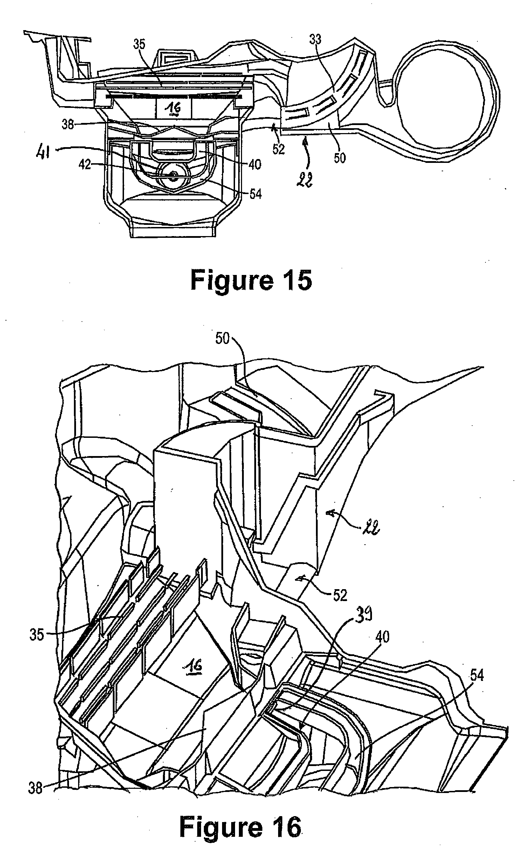

The second external water duct section 54 of the external water canal is, in contrast, connected at only one free end of the U shape, namely at the right upper end on the first external water duct section 52 of the external water canal, in reference to figure 15.

The separation wall 64 extends transversely through the water outlet opening 42 so that not only the condensation water canal 40 but also the second external water duct section 54 of the external water canal are connected to one and the same water outlet opening 42.

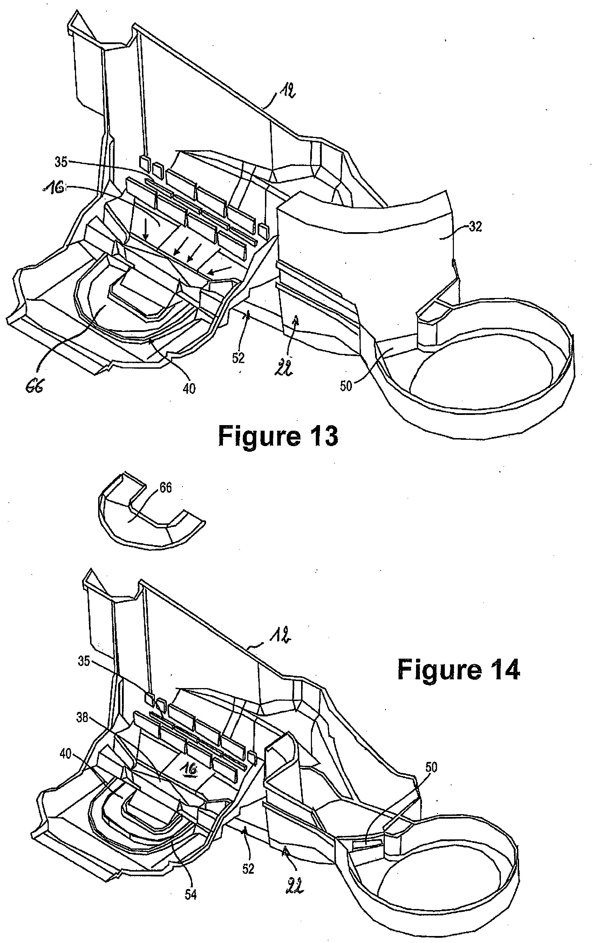

The water canal formed in such a manner is provided with the cover 66, shown in particular on figure 14, that not only overlies the lateral walls 62 but also the separation wall 64. In this manner, closed cross sections are concerned with the condensation water canal 40 and with the second external water duct section 54 of the external water canal.

The described system for removing the condensation water and the external water makes it possible to manage with minimal cost and a single water outlet opening 42 leading outside the housing 12. It is also reliably ensured that the condensation water cannot enter into the external water canal and subsequently enter into the external water collection area 50 and the converse. This leads to a high degree of functional reliability and prevents water droplets from being carried away by the airflow leaving the air conditioning system and potentially being able to enter into the vehicle interior.

Moreover, according to an alternative embodiment, which is not shown on the figures, the first external water duct section 52 is formed by a first pipe which extends on the outwards of the housing 12. Additionally, the condensation water is removed out of the housing through the water outlet opening 42. The condensation water flows then in a second pipe extending from the water outlet opening 42. According to the present embodiment, the first and second pipes are connected together outside the housing 12 to gather the condensation water and the external water.

Finally, the commonly gathered pipe removes both the condensation water and the external water to a dedicated opening which makes it possible to take away the water outside the vehicle.

It should be understood that these embodiments are given by way of illustration of the present invention. Obviously, the invention is not limited to these embodiments described above and provided only as an example.

## Claims

1. Air conditioning system (10) for a car comprising a housing (12), at least one evaporator (14) and an outlet path for condensation water that condenses on the evaporator (14), wherein the outlet path consists of a condensation water collection area (16) and a condensation water removal section (18), the condensation water collection area (16) being a collecting bowl (20), the collecting bowl (20) being limited on one side by a collection wall (22), the condensation water removal section (18) comprising at least one condensation water removal canal (40) extending from the collecting bowl (20), beneath the collection wall (22) or through at least one opening (39) arranged within the collection wall (22), to at least one water outlet opening (42), the condensation water removal canal (40) having a closed cross section, the condensation water removal canal (40) having a cover (66), the condensation water collection area (16) being formed directly downstream from the evaporator (14), **characterized in that** the collection wall (22) has two openings (39) that are arranged in the y-direction of the vehicle and **in that** the condensation water removal canal (40) comprises two coalescing branches extending from the openings (39) to the one water outlet opening (42).

2. Air conditioning system according to claim 1, **characterized in that** the collecting bowl (20) has a floor (24) that is inclined in the direction of the condensation water removal section (18) in the x-direction and/or the y-direction of the car.

3. Air conditioning system according to claims 1 or 2, **characterized in that** the collection wall (22) is formed by at least one vertical rib or by an inclined plate

4. Air conditioning system according to any one of the preceding claims, **characterized in that** the condensation water removal canal (40) is formed in the region of a separation plane between two halves of the housing (12).

5. Air conditioning system (10) according to any one of the preceding claims, the air conditioning system (10) comprising an external water collection area (50), and an external water canal (52, 54), **characterized in that** the condensation water removal canal (40) and the external water canal (52, 54) flow into the water outlet opening (42).

6. Air conditioning system (10) according to claim 5, **characterized in that** the external water canal (52, 54) extends, at least partially in sections, parallel to the condensation water removal canal (40).

7. Air conditioning system (10) according to claims 5 or 6, **characterized in that** the external water canal (52, 54) has a first external water duct section (52) extending from the vicinity of an air filter (32) to the vicinity of the evaporator (14) of the air conditioning system.

8. Air conditioning system (10) according to any one of claims 5 to 7, **characterized in that** the housing (12) comprises a common bottom surface (60), two lateral walls (62) and a separating wall (64) that separates the condensation water removal canal (40) and the external water canal (52, 54).

9. Air conditioning system (10) according to claim 8, **characterized in that** the water outlet opening (42) is arranged beneath the separation wall (64).

10. Air conditioning system (10) according to claims 8 or 9, **characterized in that** the cover (66) is positioned upon both of the lateral walls (62) and the partition wall (64) .

## Patentansprüche

1. Klimatisierungssystem (10) für ein Auto, das ein Gehäuse (12), mindestens einen Verdampfer (14) und einen Auslassweg für Kondensationswasser, das auf dem Verdampfer (14) kondensiert, umfasst, wobei der Auslassweg aus einem Kondensationswassersammelbereich (16) und einem Kondensationswasserentfernungsabschnitt (18) besteht, wobei der Kondensationswassersammelbereich (16) ein Sammelbecher (20) ist, der Sammelbecher (20) auf einer Seite durch eine Sammelwand (22) begrenzt ist und der Kondensationswasserentfernungsabschnitt (18) mindestens einen Kondensationswasserentfernungskanal (40) aufweist, der sich vom Sammelbecher (20) unterhalb der Sammelwand (22) oder durch mindestens eine Öffnung (39), die in der Sammelwand (22) angeordnet ist, zu mindestens einer Wasserauslassöffnung (42) erstreckt, wobei der Kondensationswasserentfernungskanal (40) einen geschlossenen Querschnitt aufweist, der Kondensationswasserentfernungskanal (40) eine Abdeckung (66) aufweist, der Kondensationswassersammelbereich (16) direkt stromabwärts vom Verdampfer (14) gebildet ist, **dadurch gekennzeichnet, dass** die Sammelwand (22) zwei Öffnungen (39) aufweist, die in der y-Richtung des Fahrzeugs angeordnet sind, und dadurch, dass der Kondensationswasserentfernungskanal (40) zwei zusammenlaufende Zweige umfasst, die sich von den Öffnungen (39) zu der einen Wasserauslassöffnung (42) erstrecken.

2. Klimatisierungssystem nach Anspruch 1, **dadurch gekennzeichnet, dass** der Sammelbecher (20) einen Boden (24) aufweist, der in Richtung des Kondensationswasserentfernungsabschnitts (18) in der x-Richtung und/oder der y-Richtung des Autos geneigt ist.

3. Klimatisierungssystem nach Anspruch 1 oder 2, **dadurch gekennzeichnet, dass** die Sammelwand (22) durch mindestens einen vertikalen Steg oder durch eine geneigte Platte gebildet ist.

4. Klimatisierungssystem nach einem der vorhergehenden Ansprüche, **dadurch gekennzeichnet, dass** der Kondensationswasserentfernungskanal (40) in der Region einer Trennebene zwischen den beiden Hälften des Gehäuses (12) gebildet ist.

5. Klimatisierungssystem (10) nach einem der vorhergehenden Ansprüche, wobei das Klimatisierungssystem (10) einen externen Wassersammelbereich (50) und einen externen Wasserkanal (52, 54) umfasst, **dadurch gekennzeichnet, dass** der Kondensationswasserentfernungskanal (40) und der externe Wasserkanal (52, 54) in die Wasserauslassöffnung (42) verlaufen.

6. Klimatisierungssystem (10) nach Anspruch 5, **dadurch gekennzeichnet, dass** der externe Wasserkanal (52, 54) sich mindestens teilweise in Abschnitten parallel zum Kondensationswasserentfernungskanal (40) erstreckt.

7. Klimatisierungssystem (10) nach Anspruch 5 oder 6, **dadurch gekennzeichnet, dass** der externe Wasserkanal (52, 54) einen ersten externen Wasserrohrabschnitt (52) aufweist, der sich von der Umgebung eines Luftfilters (32) zur Umgebung des Verdampfers (14) des Klimatisierungssystems erstreckt.

8. Klimatisierungssystem (10) nach einem der Ansprüche 5 bis 7, **dadurch gekennzeichnet, dass** das Gehäuse (12) eine gemeinsame untere Fläche (60), zwei Seitenwände (62) und eine Trennungswand (64), die den Kondensationswasserentfernungskanal (40) und den externen Wasserkanal (52, 54) trennt, umfasst.

9. Klimatisierungssystem (10) nach Anspruch 8, **dadurch gekennzeichnet, dass** die Wasserauslassöffnung (42) unter der Trennwand (64) angeordnet ist.

10. Klimatisierungssystem (10) nach Anspruch 8 oder 9, **dadurch gekennzeichnet, dass** die Abdeckung (66) auf beiden Seitenwänden (62) und auf der Abtrennwand (64) positioniert ist.

## Revendications

1. Système de climatisation (10) pour un véhicule, comprenant un boîtier (12), au moins un évaporateur (14) et un chemin de sortie pour l'eau de condensation qui se condense sur l'évaporateur (14), le chemin de sortie étant constitué d'une zone de collecte d'eau de condensation (16) et d'une section d'évacuation de l'eau de condensation (18), la zone de collecte d'eau de condensation (16) étant un bol de collecte (20), le bol de collecte (20) étant limité d'un côté par une paroi de collecte (22), la section d'évacuation de l'eau de condensation (18) comprenant au moins un canal d'évacuation de l'eau de condensation (40) qui s'étend à partir du bol de collecte (20), en dessous de la paroi de collecte (22) ou à travers au moins une ouverture (39) agencée dans la paroi de collecte (22), jusqu'à au moins une ouverture de sortie d'eau (42), le canal d'évacuation de l'eau de condensation (40) présentant une section transversale fermée, le canal d'évacuation de l'eau de condensation (40) comprenant un couvercle (66), la zone de collecte d'eau de condensation (16) étant formée directement en aval de l'évaporateur (14), **caractérisé en ce que** la paroi de collecte (22) comporte deux ouvertures (39) agencées dans la direction y du véhicule, et **en ce que** le canal d'évacuation de l'eau de condensation (40) comprend deux branches coalescentes qui s'étendent à partir des ouvertures (39) jusqu'à ladite une ouverture de sortie d'eau (42).

2. Système de climatisation selon la revendication 1, **caractérisé en ce que** le bol de collecte (20) présente un fond (24) qui est incliné dans la direction de la section d'évacuation de l'eau de condensation (18) dans la direction x et/ou dans la direction y du véhicule.

3. Système de climatisation selon la revendication 1 ou 2, **caractérisé en ce que** la paroi de collecte (22) est formée par au moins une nervure verticale ou par une plaque inclinée.

4. Système de climatisation selon l'une quelconque des revendications précédentes, **caractérisé en ce que** le canal d'évacuation de l'eau de condensation (40) est formé dans une région d'un plan de séparation entre deux moitiés du boîtier (12).

5. Système de climatisation (10) selon l'une quelconque des revendications précédentes, le système de climatisation (10) comprenant une zone de collecte d'eau externe (50) et un canal d'eau externe (52, 54), **caractérisé en ce que** le canal d'évacuation de l'eau de condensation (40) et le canal d'eau externe (52, 54) débouchent dans l'ouverture de sortie d'eau (42).

6. Système de climatisation (10) selon la revendication 5, **caractérisé en ce que** le canal d'eau externe (52, 54) s'étend, au moins partiellement en sections, parallèlement au canal d'évacuation de l'eau de condensation (40).

7. Système de climatisation (10) selon les revendications 5 ou 6, **caractérisé en ce que** le canal d'eau externe (52, 54) présente une première section de conduit d'eau externe (52) qui s'étend à partir du voisinage d'un filtre à air (32) jusqu'au voisinage de l'évaporateur (14) du système de climatisation.

8. Système de climatisation (10) selon l'une quelconque des revendications 5 à 7, **caractérisé en ce que** le boîtier (12) présente une surface inférieure commune (60), deux parois latérales (62) et une paroi séparante (64) qui sépare le canal d'évacuation de l'eau de condensation (40) et le canal d'eau externe (52, 54).

9. Système de climatisation (10) selon la revendication 8, **caractérisé en ce que** l'ouverture de sortie d'eau (42) est agencée en dessous de la paroi de séparation (64).

10. Système de climatisation (10) selon les revendications 8 ou 9, **caractérisé en ce que** le couvercle (66) est positionné sur les deux parois latérales (52) et la paroi de partition (64).
